# EUROPEAN PATENT APPLICATION

(11) **EP 2 663 022 A1**
(43) Date of publication of application: **13.11.2013**
(21) Application number: 12167699.3
(22) Date of filing: 11.05.2012
(51) Int. Cl.: H04L 12/24, H04L 29/12

(54) **A wired meshed network and a method for routing packets over a wired meshed network**

(71) Applicant: OTN Systems, 2250 Olen (BE)
(72) Inventor: Deschuytere, Frank, 2250 Olen (BE); Swinters, Koen, 2250 Olen (BE); Moeskops, Marc, 2250 Olen (BE)
(74) Representative: BiiP cvba

(57) **Abstract**

The present invention is directed to a method for routing packets in a wired meshed network comprising:
a. detecting neighboring nodes in a wired meshed network by setting up a point-to-point connection from a configured node to a neighboring node,
b. assigning an IPv4 address to each detected node, and
c. routing packets between the nodes via a link state routing protocol.

Further, the present invention is directed to a wired meshed network comprising:
a. a plurality of nodes,
b. a neighbor detection unit for detecting neighboring nodes, adapted for setting up a point-to-point connection from a configured node to a neighboring node,
c. a network management system assigning an IPv4 address to each detected node, and
d. a routing unit for routing packets between the nodes using a link state routing protocol.

## Description

### FIELD OF THE INVENTION

The present invention relates to the field of routing packets, and more particularly, to routing packets over wired meshed networks.

### BACKGROUND OF THE INVENTION

Meshed networking routes data, voice and instructions between nodes and allows for continuous connections and reconfiguration around blocked paths by "hopping" from one node to another node until a successful connection is established. Even if a node collapses, or a connection is bad, the meshed network still operates whether the network is wireless, wired and software interacted.

Meshed networking is implemented over a local area network or backbone. It is often decentralized and operating in an ad-hoc manner, wherein the nodes operate as repeaters and transmit data from node to node, and wherein neighbors find another route when a node is dropped.

Ad-hoc meshed networks are commonly used in wireless applications, for example mobile ad-hoc networks (MANET) for reason that they are known to be dynamically self-organizing, self-configuring, self-healing, highly scalable, having low deployment cost, being robust due to dynamic route recalculation, and easy maintainable.

However, a disadvantage of ad-hoc wireless networks is that, due to frequent topology changes or contention on a shared wireless channel, route failure occurs regularly. Such may result in packets that are buffered at intermediate nodes along the route being dropped.

Another disadvantage is the higher bandwidth required to keep ad-hoc wireless networks up and running. This results in less bandwidth available for data traffic which can be a problem on small bandwidth connection.

Still another disadvantage is that long distance wireless communication is expensive and error prone. Changing atmospheric conditions or malicious intent can easily disrupt the communication.

Therefore, in applications wherein reliable data delivery is crucial and should be absolutely assured under all circumstances, wired networks are preferred.

Considering the drawbacks of the state of the art, it is an object of the present invention to provide a wired meshed network providing the advantages of ad-hoc wireless meshed networks.

The present invention addresses the above object by providing a wired meshed network, and method for routing packets in a wired meshed network, wherein neighboring nodes are detected by setting up a point-to-point connection from a configured node to a neighboring node, wherein subsequently an IPv4 address is assigned to each detected node, and wherein packets are routed between the nodes via a link state routing protocol.

### SUMMARY OF THE INVENTION

The present invention is directed to a method for routing packets in a wired meshed network comprising:
a. detecting neighboring nodes in a wired meshed network by setting up a point-to-point connection from a configured node to a neighboring node,
b. assigning an IPv4 address to each detected node, and
c. routing packets between the nodes via a link state routing protocol.

Further, the present invention is directed to a wired meshed network comprising:
a. a plurality of nodes,
b. a neighbor detection unit for detecting neighboring nodes, adapted for setting up a point-to-point connection from a configured node to a neighboring node,
c. a network management system assigning an IPv4 address to each detected node, and
d. a routing unit for routing packets between the nodes using a link state routing protocol.

### DESCRIPTION OF THE INVENTION

In a first embodiment in accordance with the present invention, a method is provided for routing packets in a wired meshed network comprising:
a. detecting neighboring nodes in a wired meshed network by setting up a point-to-point connection from a configured node to a neighboring node,
b. assigning an IPv4 address to each detected node, and
c. routing packets between the nodes via a link state routing protocol.

By setting up a point-to-point connection between a configured node and a neighboring node, the configured node investigates whether the neighboring node responds. If it does, an IPv4 address is assigned and routing can start using a link state routing protocol.

The combination of using a wired meshed network, neighbor detection via a point-to-point connection and routing via a link state routing protocol over IPv4 results in a number of advantages: a general advantage is that the method allows a high level of self-organization, self-configuration and self-healing, while avoiding contention on shared channels or electromagnetic interferences. Such may result in decreased number of route failures and increased network robustness.

An additional advantage thereof is that less network administrator interventions are required and that such network administrator can be kept more or less shielded from underlying technical complexity. This reduces the need for training and the risk of errors.

Another additional advantage is that the Mean Time to Repair (MTTR) and the Mean Time Between Failures (MTBF) may be improved.

Another advantage is that since a link-state routing protocol is used, each node possesses information about the full network topology and contains all configuration data, making a wired meshed network applying such method staying operational without the presence of a network management system (NMS) once configured.

Another advantage is that, since neighbor detection or topology detection occurs gradually, i.e. "node-by-node", scalability is improved making the method suitable for wired meshed networks with high numbers of nodes.

In an embodiment in accordance with the present invention, detecting neighboring nodes comprises sending a link-local scope multicast packet to neighboring nodes and detecting response from nodes having a link-local scope address. Using a multicast packet, the message is sent to all interfaces of neighboring nodes, e.g. sending a ping to each neighboring node every 60 seconds. Preferably, the nodes to be detected have a default link-local scope IPv6 or generated link-local scope IPv4 address.

Alternatively, a method for routing packets in a meshed wired network is provided wherein each node comprises a Data-Communication-Network (DCN) configuration application, and wherein detecting a neighboring node comprises setting up a connection with the neighboring node's DCN configuration application using each node's link-local scope address. The DCN configuration application sends a ping message to all neighboring interfaces and waits for response. Upon receiving response from a neighboring node, the DCN configuration application checks if it is a valid neighbor.

After a neighbor node is detected, the NMS may assign an IPv4 address to the detected node and routing over a link state routing protocol may occur.

In a preferred embodiment, after setting up the point-point connection and initiating communication on a link-local IPv6 link, the DCN configuration application may set-up a connection over the link-local scope IPv6 addresses to the neighbor's DCN configuration application to confirm whether the latter is a valid neighbor. If yes, the NMS may assign an IPv4 address to the detected node and routing over a link state routing protocol may occur.

Additionally, in another embodiment in accordance with the present invention, a wired meshed network is provided comprising:
a. a plurality of nodes,
b. a neighbor detection unit for detecting neighboring nodes, adapted for setting up a point-to-point connection from a configured node to a neighboring node,
c. a network management system assigning an IPv4 address to each detected node, and
d. a routing unit for routing packets between the nodes using a link state routing protocol.

Such wired meshed network same advantages relating to the methods as described above

At least part of the neighbor detection unit is present in each node, such that each node upon being configured can start connecting neighboring nodes via a point-to-point connection.

In an embodiment of the present invention, each node has a link-local scope address. Preferably, this is already configured before assembling the network. Preferably the link-local scope address is a default link-local scope IPv6 address. A generated IPv4 link-local scope address may be also possible.

Further, the neighbor detection unit may additionally comprise a DCN configuration application adapted for setting up a connection with the neighboring node's DCN configuration application.

In an embodiment of a method or a wired meshed network in accordance with the present invention, a plurality of IPv4 addresses may be assigned to one node. In such case, each node may have its unique link-local scope address, preferably a default IPv6 link-local scope addresses, while the plurality of interfaces of the nodes each have its own IPv4 address.

In a method or a wired meshed network in accordance with the present invention, link state routing protocols may include for example Open Shortest Path First (OSPF) protocols, Intermediate System-to-Intermediate System (IS-IS) protocols, or proactive multi-hop meshed protocols such as for example Optimized Link State Routing (OLSR), Better Approach To Mobile Ad hoc Network (B.A.T.M.A.N.) and BABEL.

Proactive multi-hop meshed protocols may be preferred. Being proactive protocols, routes to all destinations within the network are known and maintained before use. Having the routes available within the standard routing table can be useful for some systems and network applications as there is no route discovery delay associated with finding a new route.

In a particular embodiment of a method or a wired meshed network in accordance with the present invention, the link state routing protocol may be OLSR. Advantages thereof are that it reduces the size of control packages, it minimizes flooding of such control traffic, and it is designed to work in a completely distributed manner, i.e. being not dependent on a central point. Further, it is a light protocol that does not need other protocols to make the network scalable and redundant in a meshed network.

Each node may comprise a variety of interface cards directly connectable by any type of application, for example data, LAN, voice or video. The interface cards convert the different analog or digital application interfaces to a digital format and pass it on to the node's common control card. The common control card then inserts the application data into a configured connection on the backbone. At the destination node the data is taken from the backbone and converted back to the appropriate digital and analog format.

The wired meshed network may be assembled using any kind of applicable wiring infrastructure, preferably a fiber optic infrastructure.

A method for routing packets or a wired meshed network in accordance with the present invention may be very much suitable for private communication backbones with mixed analog and digital applications, as used in for example metros, light rails, railways oil & gas, mining, ITS (intelligent highways, tunnels & bridges), ports, airports, utility companies, public safety and industrial campuses.

Below a more detailed description of an embodiment of the present invention is given:

When a wired meshed network in accordance with the present invention is installed, or when it is enlarged, the NMS must be capable of detecting and recognizing new (not configured) nodes and to correlate the settings in the network plan to the node.

The NMS uses for example Simple Network Management Protocol (SNMP) to configure the nodes. New nodes have no IP address, so they are not accessible from the NMS. Consequently, configuration must be done via the neighbor nodes.

By default the NMS can access the network via each configured node's front port for NMS access. From the node where the NMS is connected to, it is possible to close all other nodes' front ports for NMS access for security reasons. At this way, the network can be accessed only via one particular node to configure the network.

Once the network is configured, the NMS is not needed anymore. Each node keeps its configuration as long as the ID of the neighbors remains the same.

A point-to-point connection between two nodes is setup consisting of a single Label-Switched Path (LSP) carrying one Ethernet tunnel. This point-to-point tunnel is reserved for topology detection and node configuration using IPv6 link-local IP addresses.

Between all the nodes a WAN Multiprotocol Label Switching-Transport Profile (MPLS-TP) connection is setup for routing over Label-Switched Path (LSP). On each WAN interface, a LSP is setup enabling a packet to be label-switched through the MPLS network from one endpoint to another.

Each node must have a unique id that can be setup in hardware and has several purposes:
- Easy identification of (new) nodes on the NMS
- Neighbor ID can be used to verify the validity of a connection with that neighbor node's Wide-Area-Network (WAN) interface and to make sure that the network plan matches the network topology in reality.
- Defining the relation between IP number and ID.

The normal procedure to initiate neighbor detection is sending a scoped link-local multicast packet (ping6 -1 eth0 ff02::1) over the point-to-point connection. When the application on the neighbor node responds, the node has indeed a link-local IPv6 address. This IPv6 link-local IP address refers only to a particular physical link and is used only for communication on a particular physical network segment.

Subsequently, to be sure that the detected neighbor is a valid neighbor a connection will be set-up over this IPv6 address from the DCN configuration application on the configured node to the DCN configuration application on the neighbor node. If this connection can be set-up the neighbor will be seen as a valid neighbor node.

Additionally, the DCN configuration application will continuously poll for neighbors (interval 60 seconds). When there is a change in detected neighbors, the DCN configuration application will send a SNMP update to the NMS, which will send a SNMP trap.

As said before, when a node starts for the first time, its Wide-Area-Network (WAN) interfaces have no IPV4 address. It only has an IPv6 link-local scope address. Once the node is accepted as a valid neighbor node, the DCN-configuration application can configure its IPv4 settings. For example via Simple Network Management Protocol (SNMP) the required information is sent to the NMS, upon which the latter can then assign IPv4 addresses to the detected neighbor's WAN interfaces.

Each node can have more than one WAN interface, each having a unique IPv4 address, e.g. Node with ID1 has 2 WAN interfaces WAN1:10.0.0.10 and WAN2:10.0.1.20. So, 10.0.0.10 and 10.0.1.20 refer to the same node. At this way node ID1 is attached to the two IPv4 addresses. This is much easier to manage then 2 (or more) IPv4 addresses.

For routing, the Optimized Link State Routing Protocol (OLSR) is preferred: set up is relatively easy; it is a light protocol compared to OSFP; it is easily scalable; it needs no other protocols to make it scalable and redundant in wired meshed networks (if OSFP would be used, also VRRP, RSPT and VLANS would be required); it is easier to debug and generally less complex compared to other protocols. Further, it operates as a table driven and proactive protocol, that exchanges topology information with other nodes of the network regularly.

When the NMS has set-up the data plane of the network, it knows the relation between IPv4 addresses and node ID. Default one IPv4 address is used to communicate with services (FTP, download, setup of node ...) on the node (though a node is reachable through all of its IPv4 addresses). In case the link to the interface bearing this default IPv4 address gets down, OLSR will make sure that this default IPv4 address can be reached via one of the node's other interfaces. When the interface itself gets down the node is not reachable via the default IPv4 address anymore, but will be reached through one of the IPv4 addresses of the other interfaces.

## Claims

1. A method for routing packets in a wired meshed network comprising:
a. detecting neighboring nodes in a wired meshed network by setting up a point-to-point connection from a configured node to a neighboring node,
b. assigning an IPv4 address to each detected node, and
c. routing packets between the nodes via a link state routing protocol.

2. A method according to claim 1, wherein detecting neighboring nodes comprises sending a link-local scope multicast packet to neighboring nodes and detecting response from nodes having a link-local scope address.

3. A method according to claim 2, wherein the neighboring node has a default link-local scope IPv6 address.

4. A method according to claims 1 to 3, wherein each node comprises a DCN configuration application, and wherein detecting a neighboring node comprises setting up a connection with the neighboring node's DCN configuration application using each node's link-local scope address.

5. A method according to claims 1 to 5, wherein a plurality of IPv4 addresses (an ip address for each interface on the node) is assigned to one node.

6. A method according to claims 1 to 5, wherein the link state routing protocol is a proactive multi-hop meshed protocol.

7. A method according to claim 6, wherein the proactive multi-hop meshed protocol is OLSR.

8. A wired meshed network comprising:
a. a plurality of nodes,
b. a neighbor detection unit for neighboring nodes, adapted for setting up a point-to-point connection from a configured node to a neighboring node,
c. a network management system for assigning an IPv4 address to each detected node, and
d. a routing unit for routing packets between the nodes using a link state routing protocol.

9. A wired meshed network according to claim 8, wherein each node has a link-local scope address.

10. A wired meshed network according to claim 9, wherein the link-local scope address is a default link-local scope IPv6 address.

11. A wired meshed network according to claims 8 to 10, wherein the means for detecting neighboring nodes additionally comprises a DCN configuration application adapted for setting up a connection with the neighboring node's DCN configuration application.

12. A wired meshed network according to claim 8 to 11, wherein each node is assigned to a plurality of IPv4 addresses.

13. A wired meshed network according to claim 8 to 12, wherein the link state routing protocol is a proactive multi-hop meshed protocol.

14. A wired meshed network according to claim 13, wherein the proactive multi-hop meshed protocol is OLSR.
